# EUROPÄISCHE PATENTANMELDUNG

(11) **EP 1 898 617 A1**
(43) Veröffentlichungstag der Anmeldung: **12.03.2008**
(21) Anmeldenummer: 06120191.9
(22) Anmeldetag: 06.09.2006
(51) Int. Cl.: H04M 3/42

(54) **Zentrale Speicherung von Daten**

(71) Anmelder: SWISSCOM MOBILE AG, 3050 Bern (CH)
(72) Erfinder: Lagadec, Roger, 8105 Regensdorf (CH)
(74) Vertreter: P&TS Patents & Technology Surveys SA

(57) **Zusammenfassung**

Es ist ein Verfahren zum zentralen Abspeichern von Daten in einem Fernserver (4) offenbart. Auf den Fernserver (4) wird eine Sprachnotiz (42), die von einem Benutzer (1) aufgenommen und mit Hilfe eines Spracherkennungssystem (13, 43) in einen Text umgewandelt, als Text abgespeichert. Der Speicherbereich (42) ist benutzerspezifisch, wobei der Benutzer (1) zuvor im Fernserver (4) identifiziert wird. Gleichzeitig ist der Inhalt des Speicherbereichs (42) auf eine bestimmte Information hin vom Benutzer (1) durchsuchbar. Die Erfindung zeichnet sich dadurch aus, dass zusätzliche Daten über eine Schnittstelle (14, 24), die im Nahbereich arbeitet, an ein Telekommunikationsgerät (11) des Benutzers (1) übertragen und über das Telekommunikationsgerät (11) an den Fernserver (4) gesendet werden und zusätzlich in dem dem Benutzer (1) zugeordneten Speicherbereich (42) abgespeichert werden. Die Erfindung bezieht sich auch auf einen Fernserver (4) mit äquivalenten Merkmalen.

## Beschreibung

### Technisches Gebiet

Die Erfindung bezieht sich auf ein Verfahren zum zentralen, textbasierten Abspeichern von Daten in einem Fernserver, auf einen Fernserver und auf ein Telekommunikationsgerät entsprechend den unabhängigen Ansprüchen.

### Stand der Technik

DE-A1-199 53 813 offenbart eine Einrichtung, die aus einem Zugang zu einem öffentlichen Kommunikationsnetz, einem Algorithmus zur Spracherkennung, einer Einheit zur Datenverarbeitung, einer Datenbank zur Speicherung von Daten, aus einer Systemuhr sowie einem Terminal besteht und Telefongespräche über einen Spracherkennungsalgorithmus derart verarbeitet, dass personen- bzw. leitungsgebundene Gesprächprotokolle erstellt und abgespeichert werden. Es ist auch die Möglichkeit zur Abgabe eines Ferndiktats gegeben. Gleichzeitig wird eine Stichwortsuchfunktion eines normalen Textverarbeitungssystems erwähnt, um es dem Anwender zu ermöglichen, ein Protokoll thematisch auf Gesprächsinhalte hin zu durchsuchen.

US-A1-2005/0159959 offenbart einen zentralen, netzbasierten Sprachmemorekorder, der eine Spracherkennungsfunktion umfasst und Gespräche aufnimmt, und die so erzeugte Sprachmeldung in eine Textmeldung umwandelt. Die Textmeldung wird dem Benutzer zugestellt, so dass dieser ein Protokoll des Gesprächs erhält. Die Aktivierung erfolgt über eine spezielle Taste, ein Menu oder einen Sprachbefehl.

EP-A2-1 225 754 offenbart einen zentraler Server für Sprachmeldungen, wobei die Ablage aus einem GSM- oder Internet-Endgerät während eines Sprachdialoges offenbart ist und eine automatische Spracherkennung und zusätzliche Metadaten, einschliesslich der Zeit und Emotionen, umfasst. Nachteilig werden diese Meldungen jedoch als Audio-Dateien und nicht als Text abgelegt.

DE-A1-103 30 799 offenbart eine Vorrichtung zur Speicherung von Memos. Dies kann beispielsweise als Box, die in einer Küche an der Wand hängt, oder auch als Mobiltelefon geschehen. Das Ausführungsbeispiel umfasst ein Spracherkennungsprogramm, um den gesprochenen Inhalt in Text zu konvertieren. Der konvertierte Text kann angezeigt, ausgedruckt oder als SMS oder Email weitergeleitet werden. Es wird jedoch nachteilig keine zentrale Datenablage und auch keine Suchmöglichkeiten offenbart.

US-A-6,029,063 offenbart einen netzbasierten "Voice scratchpad", insbesondere für die Ablage von Sprachinhalt während einer telefonischen Verbindung oder wenn das Mobiltelefon im Stand-By Modus ist. US-A-6,038,441 offenbart die Aufnahme einer Sprachmemo für den Gebrauch innerhalb eines Autos mit einer lokalen Speicherung. Es können auch externe eingehende Anrufe gespeichert werden.

WO-A1-01/84815 offenbart ein netzbasiertes Memo-Diktiergerät mit einer separaten Verbindung zum Memo-Server. US-B1-6,671,353 offenbart ein lokales Diktiergerät im Mobiltelefon mit einer speziellen Taste zur Aufnahme von Sprache während einer Verbindung.

### Darstellung der Erfindung

Es ist ein Ziel der Erfindung, ein Verfahren, einen Server und ein Telekommunikationsgerät anzubieten, der sich durch vorteilhaft gegenüber dem im Stand der Technik bekannten Ausführungen unterscheidet und zusätzliche, für den Benutzer relevante Daten in einem Fernserver abspeichern kann.

Erfindungsgemäss wird dieses Ziel bei einem Verfahren gemäss dem Oberbegriff des Anspruchs 1 dadurch erreicht, dass mit dem benannten Telekommunikationsgerät eingesammelte Daten an einen Fernserver gesendet werden und zusätzlich dazu im dem Benutzer zugeordneten Speicherbereich abgespeichert werden.

Erfindungsgemäss wird dieses Ziel auch durch ein System mit den Merkmalen der unabhängigen Vorrichtungsansprüche erreicht.

Insbesondere werden die erfindungsgemässen Ziele durch einen Fernserver entsprechend dem Oberbegriff des Anspruchs 16 erreicht, der dadurch gekennzeichnet ist, dass empfangene benutzerspezifische Daten, die nicht vom Spracherkennungssystem erzeugt sind, zusätzlich im dem Benutzer zugeordneten Speicherbereich abgespeichert sind.

Diese Ziel wird auch durch ein Telekommunikationsgerät mit folgenden Merkmalen
- Mittel zur Aufnahme einer Sprachnotiz;
- Mittel zur Identifikation des Benutzer gegenüber dem Fernserver, wobei ein dem Benutzer zugeordneter Speicherbereich existiert;
- Mittel, um die Sprachnotiz an einem Fernserver weiterzuleiten;
- eine Schnittstelle, die im Nahbereich arbeitet, um Daten an das Telekommunikationsgerät zu übertragen;
- Programm, das die Übertragung Empfang der benannten Daten über die Schnittstelle, die im Nahbereich arbeitet, die Identifizierung des Benutzers gegenüber dem Fernserver und die Weiterleitung der Daten in den dem Benutzer zugeordneten Speicherbereich des Fernservers veranlasst.

Vorteilhaft kann der Benutzer mit der vorliegenden Erfindung neben Sprachnotizen weitere Daten, die er über sein Telekommunikationsgerät empfängt, in seinen Speicherbereich integrieren. Auf diese Daten, die Dinge des täglichen Lebens beispielsweise einen getätigten Einkauf betreffen können, kann er zu einem späteren Zeitpunkt zurückgreifen und durchsuchen. Es ist vorteilhaft, wenn die Abspeicherung automatisch oder halb-automatisch durch ein in das Telekommunikationsgerät geladenes Programm oder Applet geschieht. Das genannte Java-Applet oder Programm sorgt für den Empfang der Daten in dem Telekommunikationsgerät, die Identifizierung des Benutzers gegenüber dem Fernserver und das Weiterleitung der Daten an den Fernserver, wobei der Benutzer z.B. per Tastendruck oder Sprachbefehl nur ein <*ok*> für die gesamte Transaktion geben muss.

Weitere vorteilhafte Ausführungsformen sind in den Unteransprüchen angegeben.

### Kurze Beschreibung der Figuren

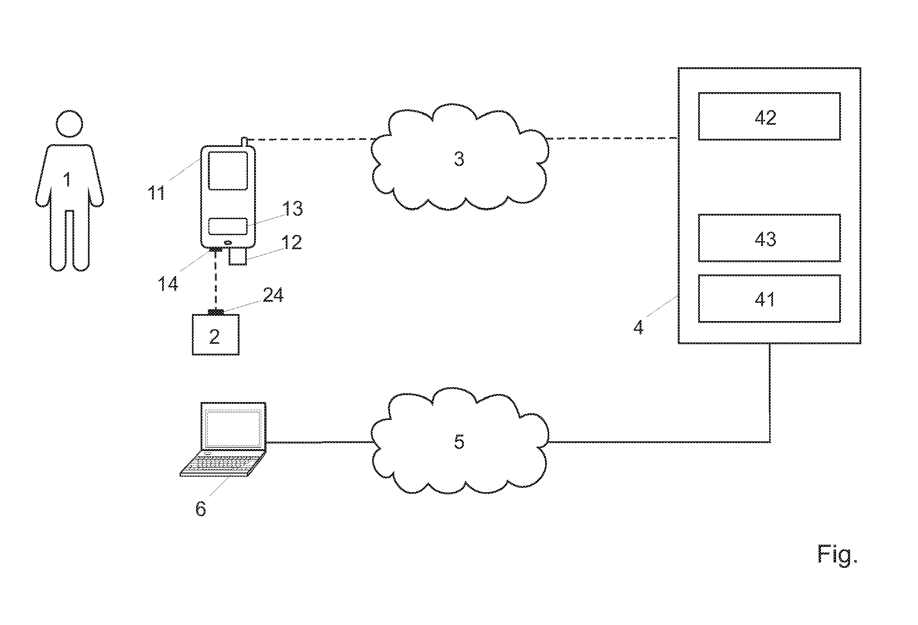

Die Erfindung wird anhand der beigefügten Figuren näher erläutert, wobei die einzige Figur ein System entsprechend der vorliegenden Erfindung zeigt.

### Wege zur Ausführung der Erfindung

Es ist erfindungsgemäss ein Verfahren zum zentralen Abspeichern von in Text umgewandelten Sprachnotizen und weiteren Daten in einem Fernserver 4 durch einen Benutzer 1 offenbart. Im Ausführungsbeispiel, welches in der einzigen Figur dargestellt ist, ist der Benutzer 1 mit einem Mobiltelefon, einem PDA, einer Playstation, einem Laptop oder einem anderen Telekommunikationsgerät 11 ausgestattet, welches an ein Kommunikationsnetz 3 angeschlossen ist. Ein Identifizierungsmodul 12 ist zur Identifizierung des Telekommunikationsgeräts 11 in dem Kommunikationsnetz 3 vorhanden, im gegebenen Beispiel handelt es sich um eine SIM-Karte in einem Mobilgerät in einem Mobilfunknetz. Das Identifizierungsmodul 12 kann wegnehmbar sein (wie eine SIM-Karte in einem Mobiltelefon) oder fest eingebaut sein. Aus dem Stand der Technik sind verschiedene Kommunikationsnetze 3 bekannt, beispielsweise ein GSM-, GPRS, HSCSD, EDGE, UMTS, CDMA-Netz oder Cable-TV oder IP-Netz, über welches auch Daten übermittelt werden können. Gleichwertige Kommunikationsnetze 3 können aber ebenso im Rahmen der Erfindung verwendet werden.

Der Fernserver 4 wird beispielsweise vom Betreiber des Kommunikationsnetzes 3 oder von einem anderen Dienstanbieter betrieben. Er weist einen Speicherbereich 42 auf, der verschiedenen Benutzern 1 zugeteilt und von diesen genutzt wird. Jeder Benutzer kann nach einer erfolgreichen Identifizierung auf seinen eigenen Teil des Speicherbereichs 42 und auf seine dort gespeicherten Texte und Daten zugreifen oder seine Texte und Daten hinterlassen. Der Fernserver 4 ist ebenfalls mit dem benannten Kommunikationsnetz 3 oder über das Internet 5 mit dem Kommunikationsnetz 3 verbunden.

Um auf seinen Speicherbereich 42 zuzugreifen und Daten oder Texte abspeichern oder abgespeicherte Daten und Texte durchsuchen zu können, muss sich der Benutzer 1 jedoch in einem ersten Schritt gegenüber dem Fernserver 4 identifizieren. Die Identifizierung kann über das genannte Identifizierungsmodul 12 des Telekommunikationsgeräts 11, über eine Anruferidentifizierung (Caller-Line-Identification CLI), über biometrische Parameter (Fingerabdruck, Iris oder Retina-Scan, etc.) und/oder über ein Passwort gegenüber dem Fernserver 4 erfolgen. Es ist auch bekannt, dass als biometrischer Parameter die Stimme des Benutzers 1 verwendet werden kann, wenn dieser eine Sprachnotiz aufnimmt oder mit dem System durch ein sprachgeführtes Menu kommuniziert. Auf diese Weise kann zwischen mehreren Benutzern eines Geräts oder eines Identifizierungsmoduls, zum Beispiel in einer Familie oder wenn mehrere Personen in einem Gespräch sprechen, unterschieden werden. Die Identifizierung des Benutzers 1 kann von dem verwendeten Gerät abhängen, da es denkbar ist, dem Benutzer weitere Zugänge zu dem Fernserver 4 und seinem persönlichen Speicherbereich 42 anzubieten. In der einzigen Figur ist der Fernserver 4 zusätzlich mit dem Internet 5 und einem Internetterminal 6 verbunden. Die Benutzeridentifizierung gegenüber dem Fernserver 4 kann also von dem Gerät 11, 6 abhängen und wird in einer Ausführungsform vom Benutzer 1 in persönlichen Einstellungen ausgewählt und eingestellt. Das Internetterminal 6 kann mit einem Identifizierungsmodul 12 versehen werden.

In einem ersten Schritt kennt das beschriebene System die Funktion, Sprachnotizen von dem Benutzer 1 aufzunehmen. Der Benutzer 1 kann sein Telekommunikationsgerät 11 auf einfache Weise dazu verwenden, in dem er sich mit dem Fernserver 4 verbindet, sich gegenüber dem Fernserver 4 identifiziert und eine Aufnahmefunktion bestätigt. Der Benutzer verbindet sich mit dem System, nimmt Dinge, die er notieren möchte, auf und speichert diese in seinem persönlichen Speicherbereich 42 ab. Es können zusätzlich auch Gespräche in der Umgebung des Telefons, Telefongespräche, die mit dem Telekommunikationsgerät durchgeführt werden, Konferenzen oder andere Sprachmeldungen aufgenommen werden, die von dem Benutzer 1 in dem Fernserver 4 abgespeichert werden. Telefongespräche werden entweder systematisch aufgenommen, oder nur wenn ein entsprechender Befehl beispielsweise über DTMF oder als Sprachbefehl von einem der Teilnehmer eingegeben wird. Möglich ist auch, dass die Aufnahme automatisch beginnt, wenn gewisse Bedingungen erfüllt sind - beispielsweise wenn gewisse Wörter gesprochen werden, oder gewisse Nummern angerufen werden. Der Dialog mit dem IVR (Interactive Voice Response System) im Fernserver kann für beide Teilnehmer hörbar sein, oder nur für jenen Teilnehmer, der den Fernserver beauftragt hat, wobei diese Entscheidung mit einem Befehl des Teilnehmers getroffen wird. Ausserdem kann entweder nur das Gesprochene des Besitzers des Telekommunikationsgeräts, oder das Gesprochene von allen Gesprächsteilnehmern aufgenommen werden. Es ist auch möglich, dass mehrere Teilnehmer gleichzeitig und separat einen Dialog im selben Fernserver aufnehmen.

Um die abgespeicherten Daten recherchierbar zu machen, befindet sich entweder im Telekommunikationsgerät 11, im Fernserver oder einem anderen Teil des Kommunikationsnetzes 3 ein Spracherkennungssystem 13, 41, welches die aufgenommene Sprachnotiz analysiert und in einen Text umwandelt. Der auf diese Weise erzeugte Text wird in dem dem Benutzer 1 zugeordneten Speicherbereich 42 des Fernservers 4 abgespeichert. Der Benutzer kann auch das Internetterminal 6 für die Aufnahme der Sprachnotiz und/oder des Gesprächs verwenden.

Das verwendete Spracherkennungssystem 13, 41 kann benutzerabhängige Sprachmodelle verwenden, die zuvor erstellt und zentral abgespeichert worden sind. Da der Benutzer 1 in jedem Fall identifiziert wird, kann auf die abgespeicherten, benutzerabhängigen Sprachmodelle zurückgegriffen werden. Durch neu aufgenommene Sprachnotizen des Benutzers 1 können gleichzeitig neue Sprachmodelle für den Benutzer erstellt werden. Durch die Identifizierung des Benutzers und die Verwendung von sprecherabhängigen Sprachmodellen kann vorteilhaft die Zuverlässigkeit der Spracherkennung erhöht werden. Die automatische Erkennung der Sprache ermöglicht es gleichzeitig, das Spracherkennungssystem 13, 41 unabhängig von der verwendeten Sprache zu verwenden.

Der Aufnahmevorgang in den Speicherbereich 42 kann auf verschiedene Weise initiiert werden. In einer einfachen Ausführungsform wählt der Benutzer eine Nummer an, die ihn mit dem Fernserver 4 verbindet. Es ist auch denkbar, dass eine vorprogrammierte Taste am Telekommunikationsgerät 11 dazu da ist, die Aufnahmefunktion oder andere Funktionen innerhalb des Fernservers 4 zu aktiveren bzw. zu deaktivieren. In einer anderen Ausführungsform muss der Benutzer 1 ein Java-Applet oder ein anderes, kleines Programm auf seinem Telekommunikationsgerät 11 installieren, bevor er den Dienst nutzen kann. Dieses Programm bietet dem Benutzer 1 ein Menu oder ein Sprachmenu an, um die verschiedenen Funktionen des Dienstes erreichen zu können. Auf den benutzereigenen Account, der auf dem Fernserver 4 angelegt ist, kann von verschiedenen Geräten aus zugegriffen werden. Auch der Zugriff durch das Internet 5 und den Computer 6 ist denkbar.

Erfindungsgemäss werden zusätzlich zu den in Text umgewandelten Sprachnotizen Daten über eine Schnittstelle 14, 24, die im Nahbereich arbeitet, an das Telekommunikationsgerät 11 des Benutzers 1 übertragen und über das Telekommunikationsgerät 11 an den Fernserver 4 gesendet. Diese Daten werden ebenfalls in dem dem Benutzer 1 zugeordneten Speicherbereich 42 abgespeichert. Es ist vorteilhaft, wenn dies automatisch oder halb-automatisch geschieht. Das genannte Java-Applet oder Programm sorgt für den Empfang der Daten in dem Telekommunikationsgerät und das Weiterleitung an den Fernserver 4. Wenn das Programm auf Daten im ldentifikationsmodul 12 oder auf andere ldentifikationsdaten des Benutzers 1 zugreifen kann, kann das Programm gleichzeitig auch für die Identifizierung des Benutzers 1 gegenüber dem Fernserver 4 sorgen. In diesem Fall gibt der Benutzer lediglich ein <*ok*> in seinem Telekommunikationsgerät für den Empfang und die Weiterleiten der relevanten Daten. In einem anderen Ausführungsbeispiel gibt der Benutzer sein Passwort zur Identifizierung ein und gibt dann sein <*ok*>. Das Programm kann auch Metadaten, die weiter unter noch näher erläutert werden, im Telekommunikationsgerät 11 erfassen und die Weiterleitung der Metadaten zusammen mit den Daten in den dem Benutzer 1 zugeordneten Speicherbereich 42 des Fernservers 4 veranlassen.

Als Schnittstelle, die im Nahbereich arbeitet, sind dem Fachmann zahlreiche Schnittstellen bekannt, so etwas Bluetooth, Infrarot, HomeRF, NFC (Near Field Communication), W-LAN, etc. Andere aus dem Stand der Technik bekannte, gleichwertige Schnittstellen sind ebenfalls für die Erfindung verwendbar. Es sind im Rahmen der Erfindung drahtlose oder auch eine drahtbehaftete Schnittstellen (etwa USB) denkbar. Die Aktivierung der Verbindung und Initiierung der Übertragung an den Server kann prinzipiell von beiden Parteien, dem Telekommunikationsgerät 11 oder dem externen Gerät 2 des beteiligten Dritten ausgehen und auch eine aktive Autorisierung des Benutzers 1 mit Tastendruck, Menuauswahl oder Sprachbefehl umfassen. Denkbar ist auch ein Modus, in welchem ein Telekommunikationsgerät kontinuierlich externe Geräte scannt und nach Information sucht, die vorbestimmte Kriterien für eine Übertragung an den Fernserver erfüllen.

In einer Ausführungsform für zusätzliche Daten werden Quittungen oder Kassenbelege über getätigte Transaktionen oder gekaufte Waren von einem Verkaufpunkt (point of sale) an das Telekommunikationsgerät 11 übertragen. Die Kassenbelege weisen eine detaillierte Auflistung von den gekauften Waren auf. Wenn diese Belege abgespeichert werden, kann der Benutzer vorteilhaft zu einem späteren Zeitpunkt auf die Daten zurückgreifen und diese im Speicherbereich für die Sprachnotizen durchsuchen. Sofern er sich also nicht mehr sicher ist, welche Waren er das letzte Mal kaufte, kann er sich einfach im Geschäft recherchieren, in dem er sich mit seinem Speicherbereich 42 über das Telekommunikationsgerät 11 verbindet. Das externe Gerät 2 ist in diesem Fall die Ladenkasse, die die Daten an das Telekommunikationsgerät 11 überträgt. Ein anderes Beispiel wie die Übertragung der Arbeitungszeiten von dem externen Gerät 2 über die Schnittstelle 14, 24 an das Telekommunikationsgerät 11 sind denkbar, so dass es keine weitere Zeiterfassung benötigt wird. Ein anderes Beispiel ist die Speicherung von Klingentönen, Logos von Broadcast-SMS oder anderen Daten, die den Telekommunikationsgerät 11 über die Schnittstelle 14, 24 im Nahbereich gesendet werden. Wenn sich der Benutzer vor einer Werbewand befindet und über Bluetooth, etc. mit dieser Werbewand verbunden ist, kann er Werbung über diese Werbewand in seinem Mobiltelefon empfangen und ebenfalls im Fernserver 4 ablegen.

Dokumente, die über eine kontaktlose Schnittstelle 14, 24 und das Benutzergerät 11 in den Server 4 gelingen, sind vorzugsweise in einem Text-Format, oder in einem anderen suchbaren Format, oder werden in einem solchen Format umgewandelt. Daten, die über eine Schnittstelle 14, 24 empfangen werden, können auch mit Sprachnotizen, die bereits in dem Fernserver 4 vorhanden sind oder mit neu erzeugten Sprachnotizen, verknüpft werden und als eine Art Attachement abgelegt werden.

Zudem ist es in einer weiteren Ausführungsform denkbar, weitere Daten, die dem Benutzer oder seinem Telekommunikationsgerät zur Verfügung stehen, an den Fernserver zu senden und in dem Speicherbereich 42 des Fernservers 4 abzuspeichern. Zu diesen Daten gehören beispielsweise Kopien von allen gesendeten oder empfangenen SMS, MMS, E-Mails, Fotos, die mit der Kamera des Telekommunikationsgeräts 11 gemacht wurden, das Telefonverzeichnis des Benutzers 1 im Telekommunikationsgerät 11 oder auch Einträge in einem Kalender im Telekommunikationsgerät 11, oder Messdaten aus Sensoren im Telekommunikationsgerät 11. Informationen, die innerhalb des Netzwerks ermittelt werden, können ebenfalls auf einfache Weise in dem Fernserver 4 abgelegt werden. Diese enthalten unter anderem Angaben über eingehende oder ausgehende Anrufe, Kosten dieser Verbindungen, Anfangs- und Endzeit, Dauer, Zustand des Teilnehmers (besetzt/nicht erreichbar/im Roaming, usw.), andere Informationen aus den CDRs (Call Detail Records), besuchte Webseiten, Angaben über Verbindungen, die über Bluetooth oder VolP entstanden sind, etc.). Auch Meldungen, die für den Benutzer 1 in einer persönlichen, netzwerkbasierten Sprachmeldungsbox (Voicemail) 43 abgelegt werden, können in dem Fernserver 4 gespeichert oder dorthin kopiert werden. In der einzigen Figur befindet sich die netzwerkbasierte Sprachmeldungsbox 43 ebenfalls im Fernserver 4. Dies ist aber nicht unbedingt notwendig und diese kann sich auch in irgendeinem anderen Teil des Kommunikationsnetzes 3 oder im Benutzergerät befinden.

Da sich der Benutzer 1 auch über einen Computer 6 und das Internet 5 mit dem Fernserver 4 verbinden kann, können prinzipiell Daten, die im Computer 6 entstehen oder gespeichert sind, automatisch oder mit einer Bestätigung des Benutzers in den Speicherbereich 42 kopiert werden. Es kann sich also um Daten (Emails, Adressbuch, Kalenderfunktion, etc.) eines Mailprogrammes, um allgemeine Textdokumente, um Daten von einem VolP-Dienst des Benutzers 1 und/oder um Daten, die aus bei einem Internetchat entstanden, handeln.

Für die Speicherung aller Texte und Daten stehen im Rahmen der Erfindung verschiedene Möglichkeiten zur Verfügung. In einer ersten Ausführungsform werden alle Dokumente in einem suchbaren Format, zum Beispiel Text, einschliesslich XML, umgewandelt und abgespeichert, so dass die Information leicht recherchierbar ist. Gleichzeitig wird die zugehörige Audiodatei *.wav, *.mp3, etc., die zu dem Text gehört, in dem Speicherbereich 42 abgespeichert. Damit hat der Benutzer 1 die Möglichkeit, das Dokument bei Bedarf zu einem späteren Zeitpunkt noch einmal anzuhören. In einer weiteren Ausführungsform wird die zugehörige Audiodatei nur in dem Speicherbereich abgespeichert, wenn es bei der Spracherkennung Zweifel an der Richtigkeit des erkannten Texts gegeben hat. Gleichzeitig können den abgespeicherten Dokumenten verschiedene Metadaten zugeordnet und mit diesem abgespeichert werden. Als Metadaten eignen sich beispielsweise Datum, Anfangszeit, Dauer, und Ort der Aufnahme, die Aussentemperatur, die an dem Tag herrschte, oder das verwendete Aufnahmegerät. Der Ort kann im Endgerät selbst, etwa mit einem GPS Empfänger, oder im Telekommunikationsnetzwerk ermittelt werden. Auch die Stimmung oder Gemütsverfassung des Benutzers 1 kann dem Text zusätzlich zugeordnet werden. Werden Stimmen von mehreren Personen in einem Speicherbereich abgelegt (beispielsweise Teilnehmer an ein Telefongespräch), kann das System auch diese Personen voneinander unterscheiden und eine entsprechende Angabe ablegen ("Teilnehmer 1 sagt: ") Der Benutzer kann auch die Personen nennen und das System kann lernen, wie der entsprechende Teilnehmer 1 heisst.

Einzelne Dateien können mit einem Wasserzeichen markiert werden, was die Suche nach dem Dokument erleichtert oder die Ursprung oder Echtheit des Dokuments beweisen kann. Die über die Schnittstelle 14, 24 empfangenen Daten können auch mit einem Zeitstempel oder einer elektronischen Unterschrift (als Metadaten) versehen werden.

Alle Dokumente können prinzipiell unorganisiert, beispielsweise chronologisch in der Reihenfolge der Aufnahme, oder in Abhängigkeit von verschiedenen Kriterien (Grösse des Dokuments, Übertragungskosten, verfügbarer Speicherplatz, etc.) abgespeichert werden. Es erübrigt sich somit die Notwendigkeit eines relationellen oder komplexen Datenbanksystems. Dem Benutzer wird zusätzlich die Möglichkeit gegeben, von seinem Telekommunikationsgerät 11 oder dem PC 6 aus, die abgespeicherten Texte und Daten zu editieren und auf eine von ihm gewünschte Weise zu klassifizieren. Die Dokumente können auch indexiert oder indiziert werden.

In allen genannten Ausführungsformen hat der Benutzer 1 die Möglichkeit, in einem Benutzprofil Angaben über die von ihm gewünschten Einstellungen in Bezug auf die Abspeicherung der Daten zu machen. Es ist dem Benutzer auch möglich, verschiedene Texte und Daten mit verschiedenen Zugriffsrechten für verschiedene Personen oder Gruppen zu versehen. Auf diese Weise kann der Benutzer seiner Familie, seinen Freunden oder seinen Arbeitskollegen selektiv die Erlaubnis geben, auf die abgespeicherten Daten zuzugreifen. Diese Personen können sich auf dieselbe Weise wie der Benutzer 1 in den Fernserver einloggen: durch ein Telekommunikationsgerät 11 über ein Kommunikationsnetz 3 oder einen Computer 6 und das Internet 5. Ein Zugriff auf die Dokumente im Fernserver 4 ist also immer möglich, auch wenn der Benutzer sein Telekommunikationsgerät 11 verloren hat oder defekt sein sollte. Einige Dokumente können auch als geheim oder nur dem Benutzer zugänglich markiert werden, so dass keine anderen Personen auf diese Dokumente Zugriff als der Benutzer 1 selber hat.

Für die Suche stehen erfindungsgemäss verschiedene Möglichkeiten zur Verfügung. Der Benutzer kann mit dem Telekommunikationsgerät 11 oder dem Computer 6 eine Suchmaschine aktivieren und Dokumente in seinem Bereich anhand von Stichworten suchen. Mit den Stichworten kann nicht nur den Inhalt der abgelegten Dokumente recherchiert werden, sondern auch Metadaten (zum Beispiel die Zeit oder den Standort), die diese Daten kennzeichnen. Die Suchmaschine wird vorzugsweise vom Betreiber des Servers betrieben und indexiert nur die Dokumente in diesem Server. Ein Benutzer kann nur nach Dokumenten suchen, die in seinem persönlichen Speicherbereich enthalten sind, oder mindestens nach Dokumente, für welche er Lesezugriffrechte besitzt.

Die Suchmaschine kann ebenfalls ein sprachgesteuertes Menu aufweisen. Diese Möglichkeit bietet sich insbesondere an, wenn ein Sprachkanal vorhanden ist, der von dem Benutzer 1 genutzt werden kann. Der Zugriff auf die Daten kann manuell zu einem vom Benutzer ausgewählten Zeitpunkt erfolgen, wenn er eine bestimmte Information sucht. Auch ein automatischer oder halbautomatischer Zugriff kann vorgesehen sein. In diesem Fall könnte eine Alarmfunktion den Benutzer an einen Termin erinnern oder es könnte sich um ein vom Benutzer voreingestelltes Kriterium (beispielsweise Ort oder Ereignis) handeln. Diese Zugriffe kann der Benutzer beispielsweise in den Benutzeroptionen angeben. In einem weiteren Ausführungsbeispiel könnte der Zugriff auf die Daten auch über die netzwerkbasierte Sprachmeldungsbox 43 erfolgen.

Die Daten eines Kalenderprogramms wie Outlook können im Fernserver 4 abgelegt werden bzw. der Fernserver 4 kann mit einem Kalenderprogramm wie Outlook synchronisiert werden. Sofern der Standort der aufgenommenen Dokumente bekannt ist, können die geographisch aufbereitet und in einer Karte dargestellt werden und Fragen wie "Welche Notiz hatte ich bloss in Kreuzberg aufgenommen? Wo ist meine KaDeWe Quittung? Wie teuer war der Kaffee in Venedig?" können anhand der Karte einfacher beantwortet werden.

Von dem Telekommunikationsgerät 11 aus kann der Benutzer 1 über ein sprachgesteuertes Menu, über eine WAP-Funktion, durch das Senden einer SMS, etc. auf seine Daten zugreifen und diese durchsuchen. Die Ergebnisse können als Text empfangen (WAP, SMS, USSD, etc.) und dem Benutzer wiedergegeben werden. Wenn eine Audiodatei vorhanden ist, kann dem Benutzer 1 diese Originaldatei mit der ursprünglich aufgenommenen Information vorgespielt werden. Auch die Synthetisierung einer Textdatei mit der Stimme des Benutzers oder einer anderen, möglicherweise bekannten oder berühmten Stimme ist möglich. Sofern ein Computer 6 verwendet wird, ergeben sich zusätzliche Möglichkeiten. Der Benutzer kann auf ein Suchergebnis über eine Internetseite zugreifen oder es kann ihm als E-Mail zugesendet werden. Prinzipiell können auch hier die Daten als Text oder (wenn vorhanden) als Audiodatei vorgespielt werden.

Dem Benutzer kann die Benutzung des persönlichen Speicherbereichs 42 für die Abspeicherung des Textes und der Daten von einem Serviceanbieter verrechnet werden. Die Art und Weise wie die Kosten verrechnet werden, kann verschieden sein. Eine Möglichkeit besteht aus einer umfassenden Gebühr für die Verwendung des Dienstes, beispielsweise als Teil seines monatlichen Abonnements für das Telekommunikationsgerät 11. Auch eine Verrechnung gemäss dem verwendeten Speicherplatz oder nur für die übertragenen Datenvolumina beim Abspeichern oder beim Suchen und Abhören der Daten ist denkbar. In einer anderen Ausführungsform gibt es eine feste Gebühr für jede gesendete oder abgehörte Meldung. Abhängig von einem Benutzerprofil, entsprechend einer oder mehreren durchgeführten Suchen oder in Abhängigkeit vom Inhalt eines abgelegten Textes oder von abgelegten Daten kann dem Benutzer in einer weiteren Ausführungsform Werbung zugesandt werden.

Der Fernserver 4 mit einem IVR-System kann auch vom Benutzer angerufen werden, um auf zusätzliche, möglicherweise benutzerspezifische Dienste und Anwendungen zuzugreifen. Möglich ist beispielsweise ein zentrales Kalenderprogramm, in welchem über Sprachbefehle Termine eingegeben werden oder welches automatisch Termine aus dem Inhalt von Sprachnotizen notiert. Als weitere interessante Anwendung kommt auch ein zentraler, netzbasierter Anrufassistant in Frage, mit welchem etwa Anrufe aufgebaut, Telefonverzeichnisse verwaltet und Sprachmeldungen abgehört werden können. Der Abruf von diesen zusätzlichen Funktionen kann beispielsweise über spezielle Sprachbefehle erfolgen. Es ist insbesondere vorteilhaft, wenn diese zusätzlichen Anwendungen auch auf den Inhalt der Sprachnotizen und auf die erweiterten Suchmöglichkeiten des Fernservers zugreifen können; es können dann Befehle wie etwa "Ruf bitte die Nummer in der Sprachnotiz von gestern Nachmittag an" oder "Ich hatte eine Sitzung in Bern letzte Woche; kannst du die entsprechende Sprachnotiz lesen?" eingegeben und vom Fernserver richtig interpretiert werden.

Die Erfindung bezieht sich neben dem Verfahren auch auf einen Fernserver und ein Telekommunikationsgerät mit den Merkmalen der unabhängigen Vorrichtungsansprüche.

### Bezugszeichenliste

- 1: Benutzer
- 11: Telekommunikationsgerät
- 12: ldentifikationsmodul
- 13: Spracherkennungssystem
- 14: Schnittstelle, die im Nahbereich arbeitet,
- 2: externes Gerät
- 24: Schnittstelle, die im Nahbereich arbeitet,
- 3: Kommunikationsnetz
- 4: Fernserver
- 41: Spracherkennungssystem
- 42: Speicherbereich
- 43: Sprachmeldungsbox des Benutzers 1
- 5: Internet
- 6: Computer, Internetterminal

## Patentansprüche

1. Verfahren zum zentralen Abspeichern von Daten in einem Fernserver (4), umfassend die Verfahrensschritte:
(a) eine Sprachnotiz von einem Benutzer (1) wird mit einem Telekommunikationsgerät (11) des Benutzers (1) aufgenommen;
(b) die Sprachnotiz wird mit Hilfe eines Spracherkennungssystems (13, 41) in einen Text umgewandelt;
(c) der Benutzer (1) wird im Fernserver (4) identifiziert, wobei verschiedene Speicherbereiche (42) des Fernservers (4) verschiedenen Benutzern (1) zugeordnet sind und
(d) der erzeugte Text wird im dem Benutzer (1) zugeordneten Speicherbereich (42) des Fernservers (4) abgespeichert, wobei der Inhalt des Speicherbereichs (42) auf eine bestimmte Information hin vom Benutzer (1) durchsuchbar ist,
**dadurch gekennzeichnet, dass**
(e) mit dem benannten Telekommunikationsgerät eingesammelte Daten an den Fernserver (4) gesendet werden und zusätzlich dazu im dem Benutzer (1) zugeordneten Speicherbereich (42) abgespeichert werden.

2. Verfahren gemäss Anspruch 1, **dadurch gekennzeichnet, dass** die benannten eingesammelten Daten über eine Schnittstelle (14, 24), die im Nahbereich arbeitet, vorerst an das Telekommunikationsgerät (11) des Benutzers (1) übertragen werden.

3. Verfahren gemäss Anspruch 1 oder 2, **dadurch gekennzeichnet, dass** ein in das Telekommunikationsgerät geladenes Programm den Empfang der benannten Daten, die Identifizierung des Benutzers (1) gegenüber dem Fernserver (4) und die Weiterleitung der Daten in dem dem Benutzer (1) zugeordneten Speicherbereich (42) des Fernservers (4) veranlasst.

4. Verfahren gemäss einem der Ansprüche 1 bis 3, **dadurch gekennzeichnet, dass** weitere Daten, die dem Benutzer (1) oder seinem Telekommunikationsgerät (11) zur Verfügung stehen, an den Fernserver (4) gesendet und in dem dem Benutzer (1) zugeordneten Speicherbereich (42) des Fernservers (4) abgespeichert werden.

5. Verfahren gemäss Anspruch 4, **dadurch gekennzeichnet, dass** diese Daten SMS, MMS, E-Mails, Fotos, Berichte über die Aktivitäten des Telekommunikationsgeräts (11), Meldung in einer netzwerkbasierten Sprachmeldungsbox (43) des Benutzers (1), Messdaten aus Sensoren des Telekommunikationsgeräts (11) und/oder Daten von einem VolP-Dienst des Benutzers (1) umfassen.

6. Verfahren gemäss einem der Ansprüche 1 bis 5, **dadurch gekennzeichnet, dass** der Text und die zusätzlichen Daten mit Metadaten abgespeichert werden.

7. Verfahren gemäss einem der Ansprüche 1 bis 6, **dadurch gekennzeichnet, dass** verschiedene Texte und Daten mit verschiedenen Zugriffsrechten für verschiedene Personen oder Gruppen versehen werden.

8. Verfahren gemäss einem der Ansprüche 1 bis 7, **dadurch gekennzeichnet, dass** sich der Benutzer (1) über ein Identifizierungsmodul (12) des Telekommunikationsgeräts (11), über eine Anruferidentifizierung, über biometrische Parameter und/oder über ein Passwort gegenüber dem Fernserver (4) identifiziert.

9. Verfahren gemäss einem der Ansprüche 1 bis 8, **dadurch gekennzeichnet, dass** der Benutzer (1) sein Telekommunikationsgerät (11) oder ein Internetterminal (6) für die Suche und/oder für die Aufnahme der Sprachnotiz verwendet.

10. Verfahren gemäss einem der Ansprüche 1 bis 9, **dadurch gekennzeichnet, dass** die Spracherkennung im Telekommunikationsgerät (11) des Benutzers (1) oder in dem Fernserver (4) geschieht.

11. Verfahren gemäss einem der Ansprüche 1 bis 10, **dadurch gekennzeichnet, dass** der umgewandelte Text mit einer zugehörigen Audiodatei in dem Speicherbereich (42) abgespeichert wird.

12. Verfahren gemäss einem der Ansprüche 1 bis 10, **dadurch gekennzeichnet, dass** der umgewandelte Text nur mit einer zugehörigen Audiodatei in dem Speicherbereich (42) abgespeichert wird, wenn die Spracherkennung Zweifel an der Richtigkeit des erkannten Texts hat.

13. Verfahren gemäss einem der Ansprüche 1 bis 12, **dadurch gekennzeichnet, dass** dem Benutzer (1) die Abspeicherung des Textes und der Daten von einem Serviceanbieter verrechnet wird.

14. Verfahren gemäss einem der Ansprüche 1 bis 13, **dadurch gekennzeichnet, dass** der Benutzer (1) Werbung entsprechend einer oder mehreren durchgeführten Suchen oder in Abhängigkeit vom Inhalt eines abgelegten Textes oder von abgelegten Daten empfängt.

15. Verfahren gemäss einem der Ansprüche 1 bis 14, **dadurch gekennzeichnet, dass** als Schnittstelle, die im Nahbereich arbeitet, Bluetooth, Infrarot, HomeRF, NFC, WLAN verwendet wird.

16. Fernserver (4) mit folgenden Merkmalen:
(a) eine Verbindung zu einem Kommunikationsnetz (3);
(b) Mittel zur Identifikation von verschiedenen Benutzern (1);
(c) verschiedene Speicherbereiche (42) des Fernservers (4), die verschiedenen Benutzern (1) zugeordnet sind, wobei der Inhalt des Speicherbereichs (42) auf eine bestimmte Information hin vom Benutzer (1) durchsuchbar ist,
(d) Text, der in einem Spracherkennungssystem (13, 43) erzeugt wurde, und in einem Speicherbereich (42) abgespeichert ist,
**dadurch gekennzeichnet, dass**
(e) empfangene benutzerspezifische Daten, die nicht vom Spracherkennungssystem (13, 43) erzeugt sind, zusätzlich im dem Benutzer (1) zugeordneten Speicherbereich (42) abgespeichert sind.

17. Fernserver (4) gemäss Anspruch 16, **dadurch gekennzeichnet, dass** das Spracherkennungssystem (43) im Fernserver (4) vorhanden ist.

18. Telekommunikationsgerät (11) **gekennzeichnet, durch** folgende Merkmale
• Mittel zur Aufnahme einer Sprachnotiz;
• Mittel zur Identifikation des Benutzer gegenüber dem Fernserver (4), wobei ein dem Benutzer zugeordneter Speicherbereich existiert;
• Mittel, um die Sprachnotiz an einem Fernserver (4) weiterzuleiten;
• Eine Schnittstelle (14, 24), die im Nahbereich arbeitet, um Daten an das Telekommunikationsgerät (11) zu übertragen;
• Programm, das die Übertragung Empfang der benannten Daten über die Schnittstelle (14, 24), die im Nahbereich arbeitet, die Identifizierung des Benutzers (1) gegenüber dem Fernserver (4) und die Weiterleitung der Daten in den dem Benutzer (1) zugeordneten Speicherbereich (42) des Fernservers (4) veranlasst.

19. Telekommunikationsgerät (11) gemäss Anspruch 18, **dadurch gekennzeichnet, dass** das Programm dem Benutzer (1) ein Menu oder ein Sprachmenu anbietet, um verschiedene Funktionen innerhalb des Fernservers (4) erreichen zu können.

20. Telekommunikationsgerät (11) gemäss einem der Ansprüche 18 oder 19, **dadurch gekennzeichnet, dass** das Programm Metadaten im Gerät (11) erfasst und die Weiterleitung der Metadaten zusammen mit den Daten in den dem Benutzer (1) zugeordneten Speicherbereich (42) des Fernservers (4) veranlasst.

21. Telekommunikationsgerät (11) gemäss einem der Ansprüche 18 bis 20, **dadurch gekennzeichnet, dass** das Telekommunikationsgerät (11) ein Spracherkennungssystem aufweist.
